Europäisches Patentamt

European Patent Office

Office européen des brevets

(11) Veröffentlichungsnummer: **0 097 873**
**B1**

(12) **EUROPÄISCHE PATENTSCHRIFT**

(45) Veröffentlichungstag der Patentschrift:
**10.12.86**

(21) Anmeldenummer: **83105855.7**

(22) Anmeldetag: **15.06.83**

(51) Int. Cl.⁴: **G 11 B 23/04**

(54) **Bandkassette.**

(30) Priorität: **25.06.82 DE 8218184 U**

(43) Veröffentlichungstag der Anmeldung:
**11.01.84 Patentblatt 84/2**

(45) Bekanntmachung des Hinweises auf die Patenterteilung:
**10.12.86 Patentblatt 86/50**

(84) Benannte Vertragsstaaten:
**AT DE FR GB IT NL**

(56) Entgegenhaltungen:
**EP - A - 0 074 032**
**DE - A - 2 204 259**
**DE - A - 3 105 633**
**DE - B - 1 188 407**
**FR - A - 2 177 137**
**FR - A - 2 194 340**
**GB - A - 2 044 733**
**US - A - 3 601 654**

(73) Patentinhaber: **BASF Aktiengesellschaft,
Carl-Bosch-Strasse 38, D-6700 Ludwigshafen (DE)**

(72) Erfinder: **Fitterer, Horst, Neckarpromenade 34,
D-6800 Mannheim (DE)**
Erfinder: **Roos, Roland, Philipp-Scheidemann-Strasse,
D-6700 Ludwigshafen (DE)**
Erfinder: **Muenzner, Wulf, Dr., Lorscher Ring 10,
D-6710 Frankenthal (DE)**
Erfinder: **Balz, Werner, Dr., Kropsburgstrasse 44,
D-6703 Limburgerhof (DE)**
Erfinder: **Berger, Heinz, Im Loehl 9, D-7640 Kehl (DE)**

ACTORUM AG

## Beschreibung

Die Erfindung betrifft eine Bandkassette mit auf zwei Flanschspulen aufwickelbarem Magnetband und mit zwischen den Flanschen am Wickelumfang in der Nähe der Stelle, an der das Band auf- bzw. abläuft, ständig unter Federkraft anliegendem Federelement.

Es ist eine Kassette für Filmkameras bekannt (US-PS 2 326 654), bei der ein Schwenkhebel an der Aufwickel-Filmrolle anliegt, der lediglich zur Anzeige des Filmendes dient.

Aus der US-PS 3 632 052 ist eine Schreibband-Kassette bekannt, bei der sogenannte Scherenarme federbelastet in ständigem Andruck am Umfang beider Bandrollen anliegen, um bei leerer Bandrolle eine Richtungsumkehr des Bandtransports auszulösen.

In beiden Anwendungen, die von Magnetband-Kassetten sehr weit entfernt liegen, werden die Hebel als von der Grösse des jeweiligen Bandrollenumfangs lageveränderliche Abtastelemente benutzt. Die Anlage der Hebel am Bandrollenumfang hat keine weitere Funktion, insbesondere keinerlei Bandführungsfunktion.

Aus der DE-OS 3 105 633 ist noch eine Videobandkassette bekannt, in der ein Banddämpfungsglied das Band gegen einen Bandführungspfosten zurückdrückt, um einen stabilen Bandlauf zu gewährleisten. Das Banddämpfungsglied besteht in einer Ausführung aus einer Federplatte aus Polyethylenterephthalat und einem Bandberührungsteil aus einem Polytetrafluorethylen mit Graphit. In einer zweiten Ausführung ist das Glied einstückig aus einem kohlenstoffhaltigen Polyethylen hoher Dichte hergestellt, wodurch Reibung und Abnutzung sowie eine elektrische Aufladung und damit ein Anhaften von Staub am Magnetband verhindert werden sollen. Die Anordnung des Banddämpfungsglieds ist im Laufweg des Bandes gewählt, um ausserhalb der Bandspulen einen festgelegten Bandlaufweg sicherzustellen. Die Bandentladungswirkung des Dämpfungsgliedes ist höchstens gering, da sie nur einseitig vorhanden ist.

Aus der FR-A-2 177 137 ist eine Magnetbandkassette mit flanschlosen Bandwickeln sowie einem gemeinsamen, nach der jeweiligen Grösse der Bandwickel verschiebbaren Bandführungsglied bekannt. Letzteres besteht aus einem Mittelteil, zwei symmetrisch angeordneten Armen und jeden Bandwickel U-förmig umgreifenden Bügeln, wobei letztere mit relativ konstantem Druck, unabhängig von der jeweiligen Wickelgrösse, an jedem Bandwickel anliegen. Das Bandführungsglied, insbesondere die Bügel, sollen dabei aus biegsamem Metall, Kunststoffmaterial oder anderem Material bestehen und elastische Eigenschaften besitzen.

Die FR-A-2 194 340 enthält ebenfalls eine Magnetbandkassette mit flanschlosen Bandwickeln und jedem zugeordnetem Federandruckelement, das einerseits mit den Bandwickel umgreifenden, kurzen Flanschen am Bandwickelumfang anliegt und sich andererseits mit einem elastischen Federteil an der Kassettenwand abstützt. In besonderer Ausführung ist der elastische Federteil ein Plättchen mit gewisser Biegesteifigkeit, so dass das Andruckelement aus Metall und/oder Kunststoff hergestellt ist. Der Federteil ist zusätzlich vorgesehen, um ein Herabrutschen der äussersten Windungen, wenn der Bandzug zu gering ist, zu verhindern.

Die DE-B-1 188 407 beschreibt eine Magnetbandkassette mit flanschlosen Bandwickeln, an deren Umfang federbelastete, starre Bandandruckhebel mit jeden Bandwickel umgreifenden Kufen vorgesehen sind. Die Bandandruckhebel sollen für die Aufrechterhaltung einer notwendigen konstanten Bandspannung sorgen und wirken somit in erster Linie als Bremshebel mit vom Bandwickeldurchmesser abhängiger Bremskraft.

Die DE-A-2 204 259 enthält eine bekannte Magnetbandkassette mit flanschlosen, koplanaren Bandwickeln und jedem Bandwickel zugeordneten Bandführungsbügeln, die die äusseren Bandwickellagen U-förmig umgreifen. Die Bügel sollen aus einem länglichen Grundkörper aus bandartigem Material, z.B. Metallblech, Messingblech, Kunststoff oder dergleichen bestehen. Aus der Beschreibung der Fertigung und der Lagerung der Bügel geht hervor, dass sie nicht federelastische, starre Körper sind, die umgebogen oder abgeknickt werden und deren Schwenklager aus einem Rohr und einem Stift bestehen. Das Band ist ausserdem mit jedem Bügel derartig gleitend verbunden, dass der Bügel durch den momentanen Bandzug an den Wickel herangezogen wird.

Aus der US-A-3 601 654 ist es bekannt, in einer Kassette mit Kunststoffgehäuse eine Verbindung der Folienseite mit der Schichtseite des Bandes dadurch herzustellen, dass in der Nähe einer ersten Umlenkrolle ein erster Bandführungsstift in Kontakt mit der Folienseite des Bandes steht, der ausserdem über ein elektrisch leitfähiges Leitband mit der Schichtseite des Bandes (am Bandwickelumfang) verbunden ist. Was den Ladungsausgleich durch Stift und Leitband betrifft, so findet dieser vor der ersten Umlenkrolle und hinter der zweiten Umlenkrolle statt, so dass sich an den Umlenkrollen selbst und im Bandabschnitt dazwischen elektrostatische Ladungen aufbauen können, die erfahrungsgemäss an den Umlenkrollen zum Blockieren des Bandes führen können. Andere bekannte Kassettenausführungen in dieser Schrift beschränken sich auf solche mit elektrisch leitfähigen Gehäusen. Der Erfindung liegt die Aufgabe zugrunde, beim schnellen Umspulen von Bandkassetten, insbesondere Videokassetten, Band-Schlaufenbildung und -Umklappen zu vermeiden und das Bandaufwickeln zu verbessern. Es soll vorteilhaft sowohl die mechanische Bandbehandlung verbessert werden als auch elektrostatische Einflüsse verringert werden. Weiterhin soll die Möglichkeit geschaffen werden, mit geringem Aufwand für beide Bandspulen die Wickel- und Bandprobleme gleichzeitig zu beseitigen und sowieso vorhandene Spulenbremsen mit einzubeziehen.

Die Aufgabe wird gemäss Patentanspruch 1 gelöst.

Vorteilhafte Ausgestaltungen der Bandkassette des Anspruchs 1 sind in den Unteransprüchen enthalten.

Damit ist es mit einfachen Mitteln möglich, die schädliche Wirkung einer Schlaufenbildung, nämlich Bandabrutschen vom Bandwickel und Umklappen des Bandes, wodurch die Kassette unbrauchbar würde, zu verhindern, indem in einem vorgegebenen Bereich das Band über definierte Federkräfte am Wickelumfang gehalten wird. Ausserdem wird durch die auf die Bandwickel und -spulen ausgeübten Reibmomente der Bandzug erhöht und die Neigung zur Schlaufenbildung selbst verringert und ein gleichmässigeres Aufwickeln des Bandes erreicht. Durch Schlaufenbildung auftretende Klappergeräusche sind ebenfalls verringerbar.

Überraschenderweise konnte auch bei A/W-Betrieb einer Videokassette und bei Quick-Motion-Betrieb der Bandlauf stabilisiert und somit ein besserer Band-Kopf-Kontakt erreicht werden. Es wurde auch bei Fernsehempfängern mit Synchronisierungsproblemen, insbesondere bei Geräten ohne Audio-/Video-Anschlussbuchse bzw. ohne Audio-/Video-Umschalter ein weniger verzerrtes Bild beobachtet. Genauer gesagt, wurden vorher verzerrte senkrechte Kanten im Bild bei Benutzung von erfindungsgemässen Folienfedern in derselben Kassette entzerrt.

Mit der Kassette mit Folienfeder(n) ist es vorteilhaft möglich, der Ursache der Schlaufenbildung, da diese überraschenderweise auf elektrostatischen Haftkräften zwischen Band und Führungsbolzen beruht, direkt abzuhelfen, durch Ableitung von Ladungsmengen, die sich auf der Bandschichtseite befinden und dadurch Anziehungskräfte zum Führungsbolzen hin bewirken können.

Es ist auch günstig, durch Ausbildung der Folienfeder mit einem Leitmaterial und einem rückwärtigen Leitverbindungteil gleichzeitig eine Ladungsableitung vom Bandwickel selbst und einen Ladungsausgleich zwischen Bandvorder- und Bandrückseite zu erreichen.

In weiterer Ausbildung kann die Anordnung in der Bandkassette so getroffen sein, dass die Folienfeder – wie an sich bekannt – mit dem Leitmaterial direkt oder indirekt sowohl an der Bandschichtseite als auch an der Bandfolienseite anliegt.

In diesem Fall wird ein selbsttätiger Ausgleich von Ladungsträgern zwischen Vorder- und Rückseite des Bandes ermöglicht, und damit eine Schlaufenbildung aufgrund von Elektrostatik sehr wirksam verhindert.

Weitere Merkmale der erfindungsgemässen Bandkassette beziehen sich auf räumliche Ausbildungen und Anordnungen der Folienfedern, z.B. je eine an jeder Schmalseite des Kassettengehäuses etwa mittig an der äusseren Bandwickelseite am Umfang anliegend, und z.B. kann auch je eine Feder an der Rückseite des Kassettengehäuses vorgesehen sein und etwa um ein Viertel des Bandwickelumfangs herumreichen und etwa mittig an der äusseren Bandwickelseite am Umfang anliegen. Es kann auch eine einzige zweiarmige Folienfeder mit sonst gleicher Ausbildung wie die vorstehenden Einzelfedern vorgesehen sein. In zweckmässiger Ausbildung kann eine gemeinsame Folienfeder auch gleichzeitig einen Bremsfederteil für eine Spulenbremsvorrichtung aufweisen.

In günstiger Ausgestaltung besitzen die Folienfedern einen gegenüber Vorder- und Rückteil etwas verjüngten Mittelteil, um unnütze Reibung an den Flanschen zu vermeiden.

Zusammengefasst sind dem oben zitierten Stand der Technik folgende Merkmale und Vorteile nicht entnehmbar:

    1) eine Kassette mit Flanschspulen,
    2) nur am Bandwickelumfang mit definierter Andruckkraft anliegende Bandandruckelemente ohne Seitenflansche,
    3) Bandandruckelemente mit Metallteilen zur wirksamen Bandentladung bzw. zum wirksamen Ladungsausgleich,
    4) aus Kunststoffolien bestehende Bandandruckelemente mit
    5) definierter Stärke zur Ausübung definierter Andruckkräfte,
    6) die Aufgabe, mit einem einzigen Element gleichzeitig die mechanische Bandbehandlung am Bandwickel zu verbessern und elektrostatische Einflüsse zu verringern.

Ausführungsbeispiele des Erfindungsgegenstandes sind nachfolgend anhand der Zeichnung näher beschrieben.

Die Figuren zeigen:

Fig.1 eine quergeschnittene Hälfte einer Kassette mit erfindungsgemässer vorn angeordneter Folienfeder,

Fig. 2 eine Querschnitts-Draufsicht auf eine Kassette mit rückwärtig angeordneten Folienfedern,

Fig. 2A eine der Federn gemäss Figur 2, jedoch mit Bremsfederteil,

Fig. 2B einen Mittelteil einer Doppelfeder mit einbezogenen Bremsfedern,

Fig. 3 ein Teil einer Kassette mit Führungsbolzen und Rückende einer Folienfeder mit Leitfunktion,

Fig. 4 eine Ausbildung einer Einzel-Folienfeder,

Fig. 5 eine quergeschnittene Kassettenhälfte mit einer Folienfeder kombiniert aus den Feder-Ausführungen in Figuren 1 und 3.

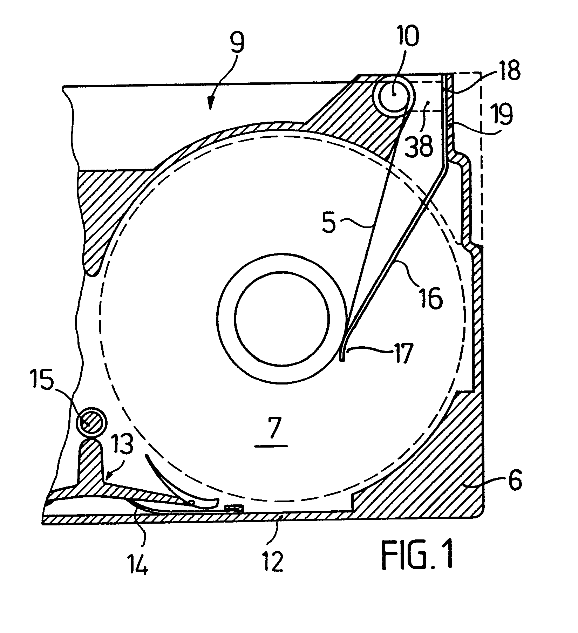

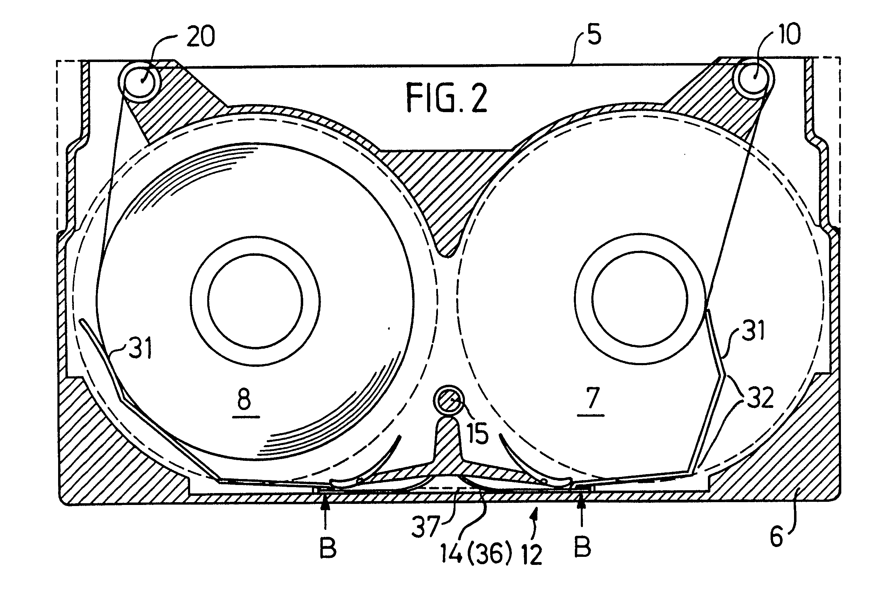

In Figur 1 zeigt ein schematischer Schnitt durch eine halbe Video-Magnetbandkassette – im folgenden als «Kassette» bezeichnet – eine Flanschspule 7 und ein an deren Spulenkern befestigtes Magnetband 5, das über eine Führungsrolle 10 an einer Frontseite 9 entlanggeführt ist und zum Aufnahme/Wiedergabe-Betrieb auf einem Gerät aus der Frontseite 9 herausgezogen wird. Beim Umspulen des Bandes 5 von der hier nicht gezeigten zweiten Flanschspule 8 auf die Spule 7 bleibt das Band 5 innerhalb der Kassette 6. In der Nähe der Rückseite 12 der Kassette 6 sind Spulenbremseinrichtungen 13 vorgesehen, die von Bremsfedern 14 in die Bremsstellung gedrückt werden, im dargestellten Fall hat ein geräteseitiger Betätigungsstift 15 die Bremse 13 ausgerückt und damit die Spulen 7 und 8 freigegeben.

Eine streifenförmige Feder 16 aus flexiblem, elastisch federndem Material ist mit einem Rückteil 18 an der Innenseite der Seitenwand 19 der Kassette 6, hier in unmittelbarer Nähe der Führungsrolle 10, geeignet befestigt. Der Vorderteil 17 der Feder 16 liegt (hier am Spulenkern) am Bandwickel gerade hinter der ersten bzw. letzten Berührungsstelle des Bandes 5 an, damit keine unerwünschten Flutter-Störungen beim A/W-Betrieb der Kassette 6 auftreten können. Die Länge und Anordnung der Feder 16 ist so gewählt, dass je nach dem jeweiligen Durchmesser des Bandwickels diese flutter-vermeidende Lage des Federvorderteils 17 und weiterer, auch bei den nachfolgend beschriebenen Federausbildungen dargestellter Federanordnungen immer gewährleistet bleibt.

Die Feder 16 und jede der anderen, noch zu beschreibenden Federn, hält das Band bei jedem Wickeldurchmesser fest, so dass es bei Schlaufenbildung nicht abrutschen kann. Die relativ geringe Feder-Andruckkraft liegt bei einer 200µm starken Feder etwa im Bereich 1 bis 200 mN (Milli-Newton) oder 2 bis 50 mN, vorzugsweise zwischen etwa 5 und etwa 30 mN. Bei 300µm starker Folienfeder liegt der Andruckkraftbereich von etwa 10 bis etwa 100 mN, insbesondere von 10 bis 50 mN. Dabei wurde jeweils die Vorspannkraft am leeren Wickelkern und die Andruckkraft am vollen Bandwickel gemessen.

Die Bandoberfläche in diesem Beispiel, die Bandschichtseite S darf durch die Federn, insbesondere die Federspitze, nicht beschädigt werden, um die A/W-Qualität nicht herabzusetzen. Es können auch zu obiger Halte- oder Andruckkraft zusätzliche Reibmomente auf die Spulen 7 und 8 ausgeübt werden, um durch zusätzlichen Bandzug den Lauf des Bandes 5 noch zu stabilisieren.

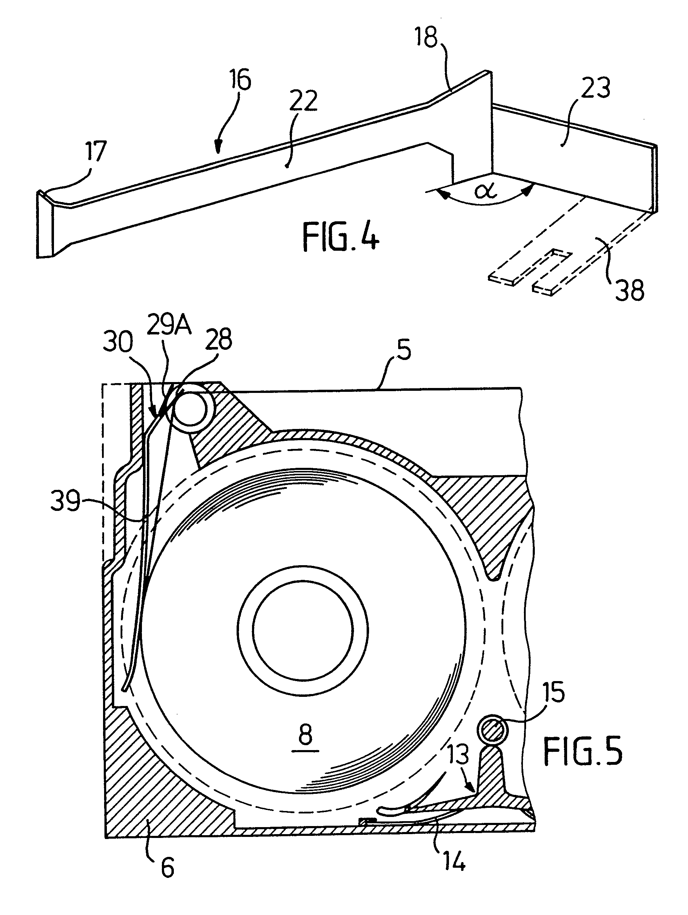

Die Befestigung der Feder 16 kann einfach durch Ankleben oder Festklemmen erfolgen. Die Form der Feder 16 kann wie in Figur 4 gewählt werden, deren Mittelteil 22 verjüngt ist, damit die Flansche der Spulen 7 bzw. 8 nicht berührt werden. Der Rückteil 18 kann wie der Vorderteil 17 ausgebildet sein und zusätzlich einen Fortsatz 23 zum Befestigen aufweisen.

Der Vorderteil der Feder kann zweckmässig abgerundet sein, um Bandbeschädigungen zu vermeiden.

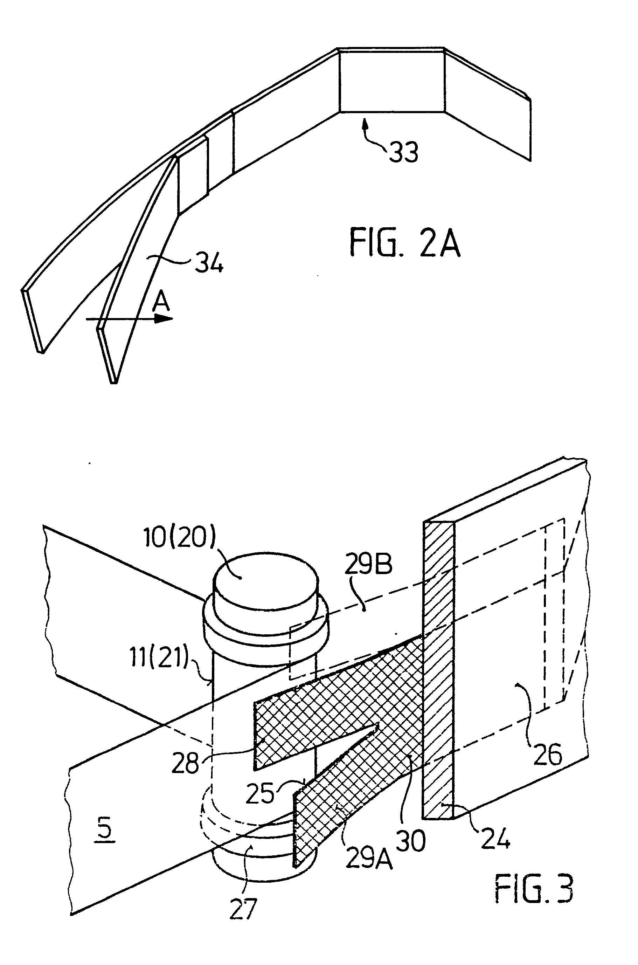

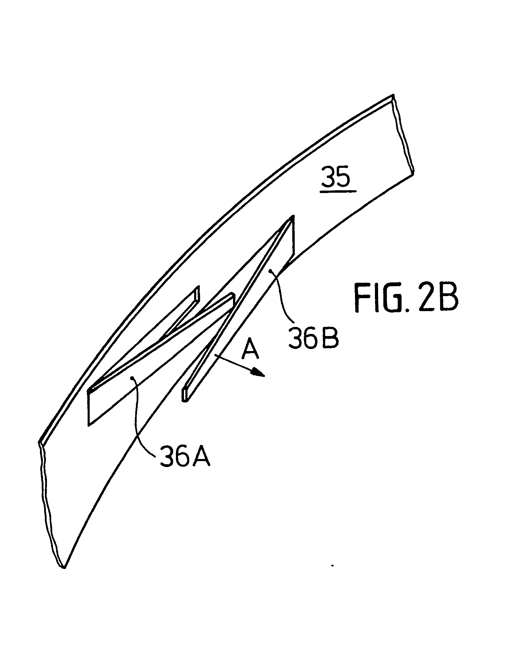

Figur 2 zeigt einen Schnitt durch eine Kassette 6 mit an der Rückseite 12 angebrachten Federn 31, die entweder als zwei identisch ausgebildete und befestigte Federn oder als eine einzige Doppelfeder ausgeführt sein können. In der Draufsicht ist die Feder 31 dem minimal zur Verfügung stehenden Raum zwischen den Flanschen geeignet anzupassen, hier sind Knickstellen 32 vorgesehen. Durch die Knickung sind die Andruckkräfte bei vollem Wickel einfach geringer zu dimensionieren.

Die Feder 31 ist als Einzel- oder Doppelfeder einstückig mit der erforderlichen Bremsfeder 14 ausgebildet und durch Klemmen (s. Pfeile B in Figur 2) befestigbar. Sie wirkt ausser auf die Bandwickel auch auf die Bremseinrichtung 13. Die Bremsfedern 14, 34 können auch oder ausschliesslich auf die Schwenkhebel der Bremse 13 oder aber direkt auf die Spulenflansche wirkend ausgebildet und angeordnet sein.

Beispiele sind in Figuren 2A und 2B dargestellt. Figur 2A zeigt einen Folienfederstreifen 33, dessen Breite geringer ist als der Abstand der Spulenflansche und der am Rückteil einen weiteren federnden Bremsstreifen 34 geeignet befestigt trägt.

Der Pfeil A gibt die Richtung der Federkraft des Bremsfederteils 34 an. Der Federstreifen 33 ist zweckmässig als Einzelfeder oder als Hälfte einer Doppelfeder an der Rückseite der Kassette geeignet befestigt.

In Figur 2B ist ein Mittelteil einer Doppelfeder 35 dargestellt, bei der aus dem Folienstreifen Bremsfederteile 36A und 36B ausgeschnitten und nach vorn gebogen sind. Pfeil A zeigt wiederum die Kraftrichtung. Damit ergibt sich eine besonders einfache Herstellungsweise der Folienfeder mit integrierten Bremsfedern.

Die beschriebenen Folienfederausführungen 16, 31 usw. sind auch gegeneinander austauschbar, z.B. kann eine geknickte Folienfeder ähnlich 31 in Figur 2 auch anstelle der Feder 16 in Figur 1 verwendet werden.

Bisher wurde der Teil der Erfindung beschrieben, der mechanisch einem Bandabrutschen und/oder einem Umklappen entgegenwirkt oder eines beseitigt und gleichzeitig durch Erhöhung des Bandzuges der Ursache, nämlich der Schlaufenbildung beim Betrieb der Kassette, mechanisch entgegenwirkt. Zusätzlich werden Bandlauf und Auf- und Abwickelvorgänge stabilisiert. Ausserdem werden erforderliche Bremsfederkräfte auf die Spulenbremseinrichtung in der Kassette mit nur geringfügigem Mehraufwand ausübbar.

Oben wurde bereits angedeutet, dass die Schlaufenbildung, besonders beim Umspulbetrieb des Bandes in der Kassette, auf elektrostatische Kräfte zurückzuführen ist. Es ist prinzipiell bekannt, dass mit der Erhöhung der Bandlaufgeschwindigkeiten auch die elektrostatischen Aufladungen der in Bewegungskontakt befindlichen Teile, wie Band und Bandführungsvorrichtungen, vergrössert werden können und dass bei elektrostatisch leicht aufladbaren Materialien Kleben des Bandes an den Vorrichtungen auftritt, insbesondere bei ungünstigen klimatischen Bedingungen und/oder besonderen Magnetschicht- und Bandfolienkombinationen. Die Folge ist ein mindestens zeitweises Blockieren des Bandes, so dass der Bandtransportvorgang unregelmässig oder unmöglich wird.

Überraschenderweise wurde an handelsüblichen Videokassetten festgestellt, dass die Kassettenbänder beim Umspulen zumindest zeitweise an den Führungsrollen und -zapfen der Kassette klebten und Blockieren und/oder Bandumklappen verursachten. In zeitlicher Reihenfolge bildeten sich Bandschlaufen durch unregelmässigen Bandtransport, wodurch Bandabrutschen und -umklappen verursacht wird.

Übliche Änderungen am Band, wie Rückseitenbeschichtung oder Leitschichtausbildung sowie das Anbringen aufwendiger Entladevorrichtungen sind für serienmässige Videokassetten zu aufwendig, es wurde daher nach einer einfachen und wirksamen Lösung des Blockier- und Schlaufenbildungsproblems gesucht.

Als erster Schritt wurde gefunden, dass ein Leitfähigmachen der Folienfedern wenigstens dann vorteilhaft war, wenn wenigstens ein Teil jeder der Folienfedern an einem Ladung abführenden oder ausgleichenden Teil anlag und der Vorderteil, wie oben beschrieben, an der Bandschichtseite am Umfang des Bandwickels anlag. Mit einer Leit-Folienfeder 31 kann, vorausgesetzt, die Bremsfeder 14, die Bremseinrichtung 13 sowie Stift 15 sind auch leitend, Ladung von der Bandschichtseite zum Stift 15, der geräteseitig geerdet ist, abgeführt werden. Besteht, wie in Figur 2 gestrichelt angedeutet, eine Verbindung 37 zwischen den Bremsfedern 14 oder 36 und sind diese leitend mit den Folienfedern 31 verbunden, so ist auch ohne eine Erdschlussverbindung über den Stift 15 ein Ladungsausgleich zwischen den Bandschichtseiten der Bandwickel möglich. Mit gleicher Wirkung kann die Verbindung 37 auch zwischen den Folienfedern 31 direkt vorgesehen sein, z.B. wie in Figur 2B bei der Doppelfeder 35.

Wie in Figur 4 angedeutet, kann am unteren Rand des Fortsatzes 23 ein senkrechter Leitteil 38 vorgesehen sein, der unter oder über die Stirnseite der Bandführungsrolle 10, 20 reicht und bei ihrer Drehung ständig damit in Kontakt steht. Damit ist durch die Leit-Folienfeder 16 ein direkter Ladungsausgleich zwischen Bandwickel und nächstliegender Führungsrolle 10 oder 20 möglich. Wenn die Rollen 10 und 20 leitend sind und zusätzlich noch mit geräteseitig geerdeten Achsen in Kontakt stehen, ist darüber hinaus eine direkte Ladungsableitung vom Bandwickel und vom Band und von den Rollen erreicht. Als zusätzlicher Effekt wird mit dem Leitteil 38 bei leitender Rollenoberfläche über die Leitfolienfeder 16 von der Bandschichtseite (am Bandwickel) über den Leitteil 38 und die Rollenoberfläche eine Leitverbindung zur Bandrückseite hergestellt, wodurch Ladungsausgleich zwischen Schicht- und Folienseite stattfindet, so dass Klebeffekte, die auf dem Kondensatoreffekt am Band selbst (unterschiedliche Ladungen auf Schicht- und Folienseite) beruhen, verhindert werden.

In Figuren 3 und 5 ist eine Folienfeder 39, mit Leitverbindungsteilen 28 bis 30 in Verbindung mit einer der Rollen 10 oder 20 und ihrer Leitoberfläche 11 bzw. 21 dargestellt. Die Folienfeder 39 ist über einen Befestigungsteil 26 geeignet an der Innenseite der Kassettenseitenwand 24 befestigt.

Das Leitmaterial ist mit 25 bezeichnet. Während der obere Teil 28 an der Bandvorderseite anliegt und das Band auf die Rolle drückt, liegt der untere Teil 29a am Kragen 27 der Rolle 10 an und stellt damit die Leitverbindung zwischen Vorderseite und Rückseite des Bandes 5 her. Um den mechanischen Andruck des Teils 28 noch zu verstärken und einen sicheren Kontakt zu gewährleisten, kann noch ein zweiter Teil 29b am oberen Kragen der Rolle anliegend vorgesehen sein (in Figur 3 gestrichelt gezeichnet).

Praktisch besteht das Leit-Verbindungsglied aus einem Folienstück, mit einem geschlitzten freien Ende, wobei der eine Endteil an der Bandschichtseite und der andere Endteil an der Leitoberfläche des Bandführungselements anliegt. Um ein zweites Leit-Verbindungsglied gegebenenfalls einzusparen, kann eine Leitverbindung die Führungselemente verbinden, die sowohl aus Metallblech, einem Graphit oder Kohle enthaltenden Lack oder Kunststoff als auch einer metallisierten Folie, z.B. einer Beilagefolie, bestehen kann.

Das Folienstück kann auch mit scharf umgeknickter Kante gleichzeitig Schicht- und Folienseite des Bandes direkt miteinander verbinden. Es ist grundsätzlich auch möglich, mit einer 90°-Abknickung die Verbindung Schicht-Folienseite an der Bandkante herzustellen.

Als Leit-Verbindungsglied kann das Folienfedernende auch einen Leitschuh aufweisen und vorteilhaft das Folienstück oder der Leitschuh aus einem Kunststoffmaterial mit Leitmittel, insbesondere Graphit oder Russ bestehen.

Alle beschriebenen Folienfederausführungen 16, 31, 33, 35 und 39 können aus Metallfolie oder aus Kunststoff-Folienmaterial, z.B. Polytetrafluorethylen oder Polyoxymethylen mit Leitmittelanteil, z.B. Graphit, Russ usw. bestehen. Es können auch Leitschichten, Leitschuhe, Leitflächen vorgesehen sein, wobei eine Leitfähigkeit im Bereich unter etwa 3 Megohm und vorzugsweise im Bereich unterhalb 1 Megohm verstanden wird. In jedem Fall ist es zweckmässig, höchstens einen ohmschen Widerstand im Bereich des Oberflächenwiderstandes der Schichtseite S des Bandes zu wählen. Bei Chromdioxidband liegt dieser z.B. bei ca. $10^5$ bis $5 \cdot 10^7$ Ohm je nach Art des Chromdioxidmaterials, Grösse der Partikel, Füllungsgrad der Schicht, verwandten Schichtzusätzen, die die Ionenleitung der Schicht erhöhen, sowie dem jeweiligen Bindemittel. Man wird die Leitfähigkeit den gegebenen Verhältnissen entsprechend so gross wie möglich wählen, möglichst nahe 0 Ohm.

Es kann auch eine Beschichtung oder Metallisierung einer oder beider Oberflächen der Folienfeder erfolgen. Dabei kommen auch Leitlack oder halbleitender Lack als Beschichtungsmittel in Frage.

Als Folienmaterial kann Polyesterfolie, z.B. im Dickenbereich von 100 bis 300μm verwendet werden, es sind aber auch alle anderen geeigneten Kunststoffmaterialien, die auch unter Feuchtigkeits- und Temperatureinflüssen federnd elastisch bleiben, verwendbar. Die Folienfedern sind grundsätzlich auch als jegliche Feder-Gebilde, die mit definierter Federkraft an den Bandwickel andrücken, ausbildbar, z.B. als direkt am Gehäuse angespritzte Federnasen oder ähnlich. Grundsätzlich sind die Folienfedern auch nachträglich durch den Hersteller der Kassetten oder den Endverbraucher in dieselben einsetzbar.

Durch die Bandkassetten mit Folienfedern nach der Erfindung werden Bandabrutschen und Umklappen wirksam verhindert, das Bandwickeln wird verbessert und der Bandumspulbetrieb oder der Bandtransport mit höherer Geschwindigkeit, d.h. oberhalb etwa 50 cm/sec ohne elektrostatische Aufladungseffekte, wird ermöglicht.

## Patentansprüche

1. Bandkassette mit auf zwei Flanschspulen (7, 8) aufwickelbarem Magnetband (5) und mit zwischen den Flanschen am Wickelumfang in der Nähe der Stelle, an der das Band (5) auf- bzw. abläuft, ständig unter Federkraft anliegendem Federelement, dadurch gekennzeichnet, dass das Federelement eine aus einem Folienmaterial bestehende Folienfeder (16, 31, 33, 35, 39) ist, die mit definierter Andruckkraft am Wickelumfang anliegt, und die zumindest an einer Seite ein elektrisches Leitmaterial (25) aufweist, das einerseits wenigstens an der Bandschichtseite am Bandwickel anliegt und andererseits entweder mit der Bandfolienseite und/oder mit Masse verbunden werden kann und dass die Folienfeder (16, 31, 33, 35, 39) aus 100 μm bis 300 μm dickem Folienmaterial besteht, wobei die definierten Andruckkräfte im Falle von 200 μm starkem Folienmaterial zwischen 1 und 5 mN bei leerem Wickelkern und zwischen 30 und 200 mN bei vollem Bandwickel liegen und im Falle von 300 μm starkem Folienmaterial bei 10 mN bei leerem Wickelkern und zwischen 50 und 100 mN bei vollem Bandwickel betragen.

2. Kassette nach Anspruch 1, dadurch gekennzeichnet, dass je eine Folienfeder (16, 39) an jeder Schmalseite des Kassettengehäuses vorgesehen ist und etwa mittig an der äusseren Bandwickelseite am Umfang anliegt.

3. Kassette nach Anspruch 1, dadurch gekennzeichnet, dass je eine Folienfeder (31, 33, 35) an der Rückseite (12) des Kassettengehäuses vorgesehen ist, die etwa um das rechte bzw. linke obere Viertel des Bandwickels herumreicht und etwa mittig an der äusseren Bandwickelseite am Umfang anliegt.

4. Kassette nach Anspruch 3, dadurch gekennzeichnet, dass eine einzige, zweiarmige Folienfeder (33, 35) an der Rückseite (12) des Kassettengehäuses vorgesehen ist, deren Arme jeder etwa um das rechte bzw. linke obere Viertel des Bandwickels herumreicht und etwa mittig an der äusseren Bandwickelseite am Umfang anliegt.

5. Kassette nach Anspruch 3 oder 4, dadurch gekennzeichnet, dass jede Folienfeder einen Bremsvorteil (34, 36) für die Bremsvorrichtung (13) für die Spulen aufweist.

6. Kassette nach einem der Ansprüche 1 bis 5, dadurch gekennzeichnet, dass die Folienfeder ein Vorderteil (17), das in der Höhe etwas kleiner ist als der Abstand der Spulenflansche, ein Mittelteil (22), das in der Höhe deutlich kleiner ist, und ein Rückteil (18) aufweist und ein Befestigungsteil (23) besitzt, das am Rückteil (18) als abgekröpfter Fortsatz vorgesehen ist.

7. Kassette nach einem der Ansprüche 1 bis 6, dadurch gekennzeichnet, dass die Folienfeder (16, 39) mit dem Leitmaterial am Vorderteil am Bandwickelumfang anliegt und mit einem Leitverbindungsteil (30, 38) gleichzeitig an der Bandschichtseite und an der Leitoberfläche (11, 21) eines Bandführungselementes (10, 20) anliegt.

8. Kassette nach Anspruch 7, gekennzeichnet durch ein Leitverbindungsteil (30), das als geschlitztes freies Ende der Folienfeder (39) ausgebildet ist, wobei ein Endteil (28) an der Bandschichtseite (S) und das andere Endteil (29) an der Leitoberfläche (11 bzw. 21) des Bandführungselements (10 bzw. 20) anliegt.

9. Kassette nach einem der Ansprüche 1 bis 8, dadurch gekennzeichnet, dass der Ohmsche Widerstand des Leitmaterials der Folienfeder etwa in der Grössenordnung des Oberflächenwiderstandes der Bandschichtseite (S) im Bereich bis etwa 3 Megohm, insbesondere im Bereich bis etwa 1 Megohm, liegt.

10. Kassette nach Anspruch 9, dadurch gekennzeichnet, dass das Folienmaterial der Folienfeder selbst oder ein Leitschuh aus einem Kunststoffmaterial, insbesondere Polyester oder Polyoxymethylen, mit eingearbeitetem Leitmittel, insbesondere Graphit oder Russ, besteht.

## Claims

1. A tape cassette comprising a magnetic tape (5) which can be wound on two flanged reels (7, 8) and, between the flanges of each reel, a resilient member which constantly bears against the periphery of the tape roll in the vicinity of the point where the tape (5) joins or leaves the roll, wherein the resilient member is a spring (16, 31, 33, 35, 39) made of metal foil or plastics film which bears against the periphery of the roll with a specific force, and has an electrically conductive material (25) on at least one side, which material, on the one hand, is in contact with at least the coated side of the tape on the tape roll and, on the other hand, can be connected to the uncoated side of the tape and/or to the recorder chassis, and wherein the spring (16, 31, 33, 35, 39) consists of metal foil or plastics film material from 100 μm to 300 μm in thickness, the specific force exerted in the case of 200 μm thick material being from 1 to 5 mN when the reel is empty and from 30 to 200 mN when the reel is full, and in the case of 300 μm thick material about 10 mN when the reel is empty and from 50 to 100 mN when the reel is full.

2. A cassette as claimed in claim 1, wherein a spring (16, 39) is arranged on each narrow side of the cassette housing and bears against the outer side of the tape roll approximately in the middle.

3. A cassette as claimed in claim 1, wherein two springs (31, 33, 35) are arranged on the rear wall (12) of the cassette housing, which springs extend, respectively, around approximately the right-hand and left-hand upper quarters of the tape rolls and bear against the outer sides of the rolls approximately in the middle.

4. A cassette as claimed in claim 3, wherein a single, twoarmed spring (33, 35) is arranged on the rear wall (12) of the cassette housing, the arms extending, respectively, around approximately the right-hand and left-hand upper quarters of the tape rolls and bearing against the outer sides of the tape rolls approximately in the middle.

5. A cassette as claimed in claim 3 or 4, wherein each spring includes a braking spring portion (34, 36) for al reel-braking device (13).

6. A cassette as claimed in any of claims 1 to 5, wherein the spring has a free end (17) whose height is somewhat less than the distance between the reel flanges; a central portion (22) whose height is distinctly less than the said distance; a rear end portion (18); and a fastening portion (23) in the form of a bent-over extension provided on the rear end portion (18).

7. A cassette as claimed in any of claims 1 to 6, wherein the free end of the spring (16, 39), carrying the electrically conductive material, bears against the periphery of the tape roll, while a conductive connecting portion (30, 38) of the spring is in simultaneous contact with the coated side of the tape and the conductive surface (11, 21) of a tape guide means (10, 20).

8. A cassette as claimed in claim 7, wherein the spring (39) has a slit free end which constitutes a conductive connector (30), one end portion (28) being in contact with the coated side (S) of the tape and the other end portion (29) with the conductive surface (11, 21) of the tape guide means (10, 20).

9. A cassette as claimed in any of claims 1 to 8, wherein the ohmic resistance of the conductive material on the spring is about the same as the surface resistance of the coated side (S) of the tape, being in the range up to about 3 megohms and particularly in the range up to about 1 megohm.

10. A cassette as claimed in claim 9, wherein the material from which the spring itself is made, or a conductive shoe consists of a plastics material, particularly a polyester or polyoxymethylene, containing a conductive material, especially graphite or carbon black.

**Revendications**

1. Cassette à bande magnétique, enroulable sur deux bobines à bride (7, 8), et à élément à ressort, entre les brides, rappelé en permanence élastiquement sur la périphérie du rouleau au voisinage du point oú la bande (5) y arrive ou en part, caractérisée par le fait que l'élément à ressort est un ressort-lame (16, 31, 33, 35, 39), constitué par une matière en feuille métallique qui s'applique sur la périphérie du rouleau avec une force d'application définie et qui comporte, au moins sur une face, une matière conductrice de l'électricité (25) qui d'une part, s'applique sur le rouleau de bande, au moins sur la face-couche de la bande et, d'autre part, peut être reliée ou bien à la face-feuille de la bande et/ou à la masse, et le ressort-lame (16, 31, 33, 35, 39) est constitué d'une matière en feuille de 100 μm à 300 μm d'épaisseur, les forces d'application, pour une matière en feuille de 200 μm d'épaisseur, étant comprises entre 1 et 5 mN lorsque le noyau d'enroulement est vide et entre 30 et 200 mN lorsque l'enroulement de bande est plein, et, pour une matière en feuille de 300 μm d'épaisseur, ces forces d'application étant de 10 mN lorsque le noyau est vide et comprises entre 50 et 100 mN lorsque l'enroulement de bande est plein.

2. Cassette selon la revendication 1, caractérisée par le fait qu'il est prévu un ressort-lame (16, 39) sur chaque petite face du boîtier de cassette et chacun s'applique à peu près centralement à la périphérie sur la face extérieure de la bobine de bande.

3. Cassette selon la revendication 1, caractérisée par le fait qu'un ressort-lame (31, 33, 35) est prévu sur la face arrière (12) du boîtier de cassette, ressort qui entoure à peu près le quart supérieur droit ou gauche de la bobine de bande et s'applique, à peu près centralement, à la périphérie sur la face extérieure de la bobine de bande.

4. Cassette selon la revendication 3, caractérisée par le fait qu'il est prévu un seul ressort-lame à deux bras (33, 35) sur la face arrière (12) du boîtier de cassette, et chacun de ces bras entoure à peu près le quart supérieur droit ou gauche de la bobine de bande et s'applique, à peu près centralement, à la périphérie sur la face extérieure de la bobine de bande.

5. Cassette selon la revendication 3 ou 4, caractérisée par le fait que chaque ressort-lame possède une partie élastique de freinage (34, 36) pour le dispositif de freinage (13) des bobines.

6. Cassette selon l'une des revendications 1 à 5, caractérisée par le fait que le ressort-lame comporte une partie avant (17) qui est un peu plus petite en hauteur que l'écartement entre brides des bobines, une partie médiane (22), qui est nettement plus petite en hauteur, et une partie arrière (18) et possède une partie de fixation (23) qui est prévue comme prolongement recourbée de la partie arrière (18).

7. Cassette selon l'une des revendications 1 à 6, caractérisée par le fait que le ressort-lame (16, 39) s'applique à la périphérie de la bobine de bande par de la matière conductrice à sa partie avant et s'applique, par une partie de liaison conductrice (30, 38), simultanément sur la face-couche de bande et sur la surface conductrice (11, 21) d'un élément de guidage de bande (10, 20).

8. Cassette selon la revendication 7, caractérisée par une partie de liaison conductrice (30) réalisée sous forme d'extrémité libre fendue du ressort-lame (39), une partie d'extrémité (28) s'appliquant sur la face-couche de bande (S) et l'autre partie d'extrémité (29) s'appliquant sur la surface conductrice (11 ou 21) de l'élément de guidage de bande (10 ou 20).

9. Cassette selon l'une des revendications 1 à 8, caractérisée par le fait que la résistance ohmique de la matière conductrice du ressort-lame est à peu près de l'ordre de grandeur de la résistance superficielle de la face-couche de bande (S), dans la zone jusqu'à environ 3 Megohm, en particulier dans la zone jusqu'à environ 1 Megohm.

10. Cassette selon la revendication 9, caractérisée par le fait que la matière de lame du ressort-lame elle-même ou un patin conducteur est constituée par une matière plastique, en particulier polyester ou polyoxyméthylène, avec agent conducteur incorporé, en particulier graphite ou noir de fumée.

FIG.1

FIG. 2

FIG. 2A

FIG.3

35

FIG. 2B

36B

A

36A

FIG.4

FIG.5